# EUROPEAN PATENT APPLICATION

(11) **EP 4 848 830 A1**
(43) Date of publication of application: **02.12.2026**
(21) Application number: 24919384.8
(22) Date of filing: 26.01.2024
(51) Int. Cl.: H04W 52/02, H04L 27/26

(54) **TRANSMISSION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); ZHANG, Zhi, Dongguan, Guangdong 523860 (CN)
(74) Representative: Taor, Simon Edward William
(86) International application number: PCT/CN2024/074318
(87) International publication number: WO 2025/156286

(57) **Abstract**

The present application relates to a transmission method, a terminal device, a network device, a chip, a computer readable storage medium, a computer program product, a computer program, and a communication system. The transmission method comprises: a terminal device receives first indication information from a network device, wherein the first indication information is used for indicating transmission of a first channel, and the first indication information is carried by a sequence modulation-based first signal. Because the first indication information is sent on the basis of sequence modulation, the terminal device can use a terminal receiver having low power consumption and low complexity for reception, thereby reducing terminal power consumption and optimizing terminal energy-saving technology.

## Description

### TECHNICAL FIELD

The present application relates to the field of communications, and in particular to a method for transmission, a terminal device, a network device, a chip, a computer-readable storage medium, a computer program product, a computer program, and a communication system.

### BACKGROUND

The energy saving of terminals is carried out by transitioning between multiple states with different power consumption. When there is data service, the terminals are quickly awakened by network side and matched with reasonable resources to transmit data with high energy efficiency. When there is no data service, the terminals need to enter a low power consumption state timely. At present, the energy-saving technology for the terminals still needs to be further optimized.

### SUMMARY

Embodiments of the present application provide a method of transmission, a terminal device, a network device, a chip, a computer-readable storage medium, a computer program product, a computer program, and a communication system, in order for optimization of terminal energy saving.

An embodiment of the present application provides a method of transmission, including the following operation.

A terminal device receives first indication information from a network device. Herein, the first indication information is used to indicate transmission of a first channel, and the first indication information is carried by a first signal based on sequence modulation.

An embodiment of the present application provides a method of transmission, including the following operation.

A network device sends first indication information to a terminal device. Herein, the first indication information is used to indicate transmission of a first channel, and the first indication information is carried by a first signal based on sequence modulation.

An embodiment of the present application provides a terminal device, including a first communication unit.

The first communication unit is configured to receive first indication information from a network device. Herein, the first indication information is used to indicate transmission of a first channel, and the first indication information is carried by a first signal based on sequence modulation.

An embodiment of the present application provides a network device, including a second communication unit.

The second communication unit is configured to send first indication information to a terminal device. Herein, the first indication information is used to indicate transmission of the first channel, and the first indication information is carried by a first signal based on sequence modulation.

An embodiment of the present application provides a terminal device, including: a transceiver, a processor, and a memory. The memory is configured to store a computer program, the transceiver is configured to communicate with other devices, and the processor is configured to invoke and execute the computer program stored in the memory to cause that the terminal device performs the method of transmission as described above.

An embodiment of the present application provides a network device, including: a transceiver, a processor, and a memory. The memory is configured to store a computer program, the transceiver is configured to communicate with other devices, and the processor is configured to invoke and execute the computer program stored in the memory to cause that the network device performs the method of transmission as described above.

An embodiment of the present application provides a chip, which is used to implement the method for transmission as described above.

Specifically, the chip includes a processor, configured to invoke and execute a computer program from a memory, to cause that a device on which the chip is mounted performs the method for transmission as described above.

An embodiment of the present application provides a computer readable storage medium, for storing a computer program that, when executed by a device, causes the device to perform the method for transmission as described above.

An embodiment of the present application provides a computer program product, including computer program instructions that cause a computer to perform the method for transmission as described above.

An embodiment of the present application provides a computer program that, when running on a computer, causes the computer to perform the method for transmission as described above.

In the embodiments of the present application, the network device indicates the transmission of a first channel to the terminal device through first indication information, and the first indication information is carried by a first signal based on sequence modulation. Since the first indication information is transmitted based on sequence modulation, the terminal device can use a terminal receiver with lower power consumption and lower complexity for reception, thereby reducing terminal power consumption and optimizing the terminal energy saving technology.

### BRIEF DESCRIPTION OF THE DRAWINGS

FIG. 1 is a schematic diagram of a communication system according to embodiments of the present application.
FIG. 2 is a schematic diagram of active time and inactive time of DRX.
FIG. 3 is a schematic flowchart of a transmission method according to an embodiment of the present application.
FIG. 4 is a schematic flowchart of a transmission method according to another embodiment of the present application.
FIG. 5 is a schematic diagram of sequence modulation according to embodiments of the present application.
FIG. 6 is a schematic diagram of an application scenario of a transmission method in embodiments of the present application.
FIG. 7 is a schematic diagram of another application scenario of a transmission method in embodiments of the present application.
FIG. 8 is a schematic diagram of processing capabilities of a terminal device in embodiments of the present application.
FIG. 9 is a schematic block diagram of a terminal device according to an embodiment of the present application.
FIG. 10 is a schematic block diagram of a terminal device according to another embodiment of the present application.
FIG. 11 is a schematic block diagram of a terminal device according to yet another embodiment of the present application.
FIG. 12 is a schematic block diagram of a network device according to an embodiment of the present application.
FIG. 13 is a schematic block diagram of a terminal device according to embodiments of the present application.
FIG. 14 is a schematic block diagram of a chip according to embodiments of the present application.
FIG. 15 is a schematic block diagram of a communication system according to embodiments of the present application.

### DETAILED DESCRIPTION

The technical solutions in the embodiments of the present application will be described below in conjunction with the accompanying drawings in the embodiments of the present application.

The technical solutions in the embodiments of the present application may be applied to various communication systems, such as a Long Term Evolution (LTE) system, an Advanced long term evolution (LTE-A) system, a New Radio (NR) system, an evolution system of the NR system, a LTE-based access to unlicensed spectrum (LTE-U) system on unlicensed spectrum, an NR-based access to unlicensed spectrum (NR-U) system, a Non-Terrestrial Networks (NTN) system, a Universal Mobile Telecommunication System (UMTS), wireless local area networks (WLAN), Wireless Fidelity (Wi-Fi), a 5th-Generation (5G) system, a 6th-Generation (6G) system, or other communication systems.

Generally, conventional communication systems support a limited number of connections and are easy to implement. However, with the development of communication technologies, the mobile communication system will support not only conventional communication, but also support, for example, Device to Device (D2D) communication, Machine to Machine (M2M) communication, Machine Type Communication (MTC), Vehicle to Vehicle (V2V) communication, or Vehicle to everything (V2X) communication, and the like. The embodiments of the present application may also be applied to these communication systems.

In an implementation, the communication system in the embodiments of the present application may be applied to a Carrier Aggregation (CA) scenario, a Dual Connectivity (DC) scenario, or a Standalone (SA) deployment scenario.

In an implementation, the communication system in the embodiments of the present application may be applied to an unlicensed spectrum, where the unlicensed spectrum may also be regarded as a shared spectrum. Or, the communication system in the embodiments of the present application may also be applied to a licensed spectrum, where the licensed spectrum may also be regarded as a non-shared spectrum.

Various embodiments are described in combination with a network device and a terminal device in the embodiments of the present application. The terminal device may refer to user equipment (UE), an access terminal, a subscriber unit, a subscriber station, a mobile station, a mobile station, a mobile terminal, a remote station, a remote terminal, a mobile device, a user terminal, a terminal, a wireless communication device, a user agent, or a user device, and the like.

The terminal device may be a STATION (ST), a cellular phone, a cordless phone, a session initiation protocol (SIP) telephone, a wireless local loop (WLL) station, a personal digital assistant (PDA) device, a handhold device with wireless communication function, a computing device or other processing devices connected to a wireless modem, an in-vehicle device, a wearable device, a terminal device in the next-generation system (for example, NR network) or a terminal device in the future evolved public land mobile network (PLMN) network, etc.

In the embodiments of the present application, the terminal device may be deployed on land, including indoor or outdoor, handhold, wearable, or vehicle-mounted. It may also be deployed on the water (such as ships, etc.), or in the air (e.g. on aircraft, balloons and satellites, etc.).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in embodiments of the present application, the terminal device may also be a wearable device. The wearable device, also referred to as wearable smart device, represents a general term for intelligently designed items developed by applying wearable technology to everyday wearable, for example, glasses, gloves, watches, clothing, and shoes, etc. The wearable device is a portable device that is worn directly on the body or integrated into the user's clothes or accessories. The wearable device is not only a kind of hardware devices, but also realizes powerful functions through software support, data interaction and cloud interaction. Generalized wearable smart devices include both fully-featured and larger-sized devices that may operate independently or partially independently without relying on a smartphone, such as smart watches or smart glasses, as well as devices focused on specific types of application functions, which require pairing with other devices like smartphones, such as various smart bands or smart jewelry designed for monitoring physiological signs.

In the embodiments of the present application, the network device may be a device for communicating with mobile devices. The network device may be an access point (AP) in WLAN, an evolutional Node B (eNB or eNodeB) in LTE, or a relay station or access point, or a vehicle-mounted device, a wearable device, and a network device (gNB) in an NR network, or a network device in a future evolved Public Land Mobile Network (PLMN) network, or a network device in a non-terrestrial network (NTN).

As an example and not limitation, in the embodiments of the present application, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Optionally, the network device may also be a base station disposed on land, on the water, or the like.

In the embodiments of the present application, the network device may provide services for a cell, and the terminal device communicates with the network device through transmission resources (for example, frequency domain resources or spectrum resources) used by the cell. The cell may be a cell corresponding to an access network device (for example, a base station), and the cell may belong to a macro base station or a base station corresponding to a Small cell. Here, the small cell may include a Metro cell, a Micro cell, a Pico cell, a Femto cell, etc. These small cells have the characteristics of small coverage and low transmission power, and are suitable for providing high-speed data transmission services.

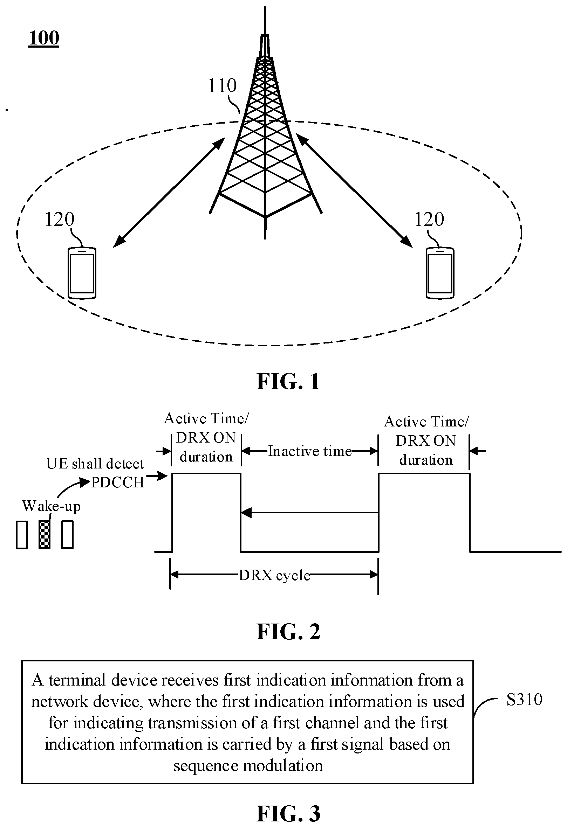

FIG. 1 exemplarily illustrates a communication system 100. The communication system includes a network device 110 and two terminal devices 120. In an implementation, the communication system 100 may include multiple network devices 110, and another number of terminal devices may be included within the coverage of each network device 110, which is not limited in the embodiments of the present application.

It should be understood that a device having a communication function in the network/system in the embodiments of the present application may be referred to as a communication device. Taking the communication system illustrated in FIG. 1 as an example, the communication device may include a network device and terminal devices having a communication function, and the network device and the terminal device may be specific devices in the embodiments of the present application and will not be repeated here. The communication device may also include other devices in the communication system, for example other network entities such as a network controller and a mobility management entity, which are not limited in the embodiments of the present application.

It should be understood that the terms "system" and "network" herein may often be used interchangeably. The term "and/or" herein is merely an association relationship for describing related objects, representing that there may be three kinds of relationships. For example, A and/or B may represent the following three situations: i.e., independent existence of A, existence of both A and B, and independent existence of B. In addition, the character "/" in the present disclosure generally represents that an "or" relationship is formed between the previous and next associated objects.

It should be understood that the "indication" mentioned in the embodiments of the present application may be a direct indication, an indirect indication, or may represent an associated relationship. For example, A indicating B may mean that A directly indicates B, for example, B may be acquired by A. It may also mean that A indicates B indirectly, for example A indicates C, and B may be acquired by C. It may also mean that there is an association relationship between A and B.

In the description of the embodiments of the present application, the term "correspondence" may indicate that there is a direct correspondence or indirect correspondence between the two, or indicate that there is a correlation relationship between the two, or indicate a relationship between indicating and being indicated, configuring and being configured, or the like.

To facilitate understanding of the technical solutions in the embodiments of the present application, the related technologies involved in the embodiments of the present application are described below. As optional solutions, the following related technologies may be combined with the technical solutions of the embodiments of the present application arbitrarily, all of which fall within the protection scope of the embodiments of the present application.

For the purpose of terminal power saving, existing communication systems support a Discontinuous Reception (DRX) transmission mechanism. The main principle is to achieve discontinuous signal reception in time domain through semi-static configuration. When there is no data transmission, power consumption can be reduced by stopping the reception of Physical Downlink Control Channel (PDCCH) and stopping PDCCH blind detection.

The method for configuring DRX is to configure one DRX cycle for UE in the RRC connected state (RRC_CONNECTED). As illustrated in FIG. 2, the DRX cycle consists of active time and inactive time. During the active time, the UE monitors and receives PDCCH, while during the inactive time (dormant time), the UE does not receive PDCCH to reduce power consumption.

In energy-saving enhancements of NR, the DRX mechanism may also be used in combination with a wake-up signal mechanism. Specifically, the terminal receives an indication of an energy-saving wake-up signal before a DRX ON duration. As illustrated in FIG. 2, when there is data transmission for a terminal in one DRX cycle, the terminal is "awaken" by the energy-saving wake-up signal to detect PDCCH during the DRX ON duration. Otherwise, when there is no data transmission for a terminal in one DRX cycle, tthe terminal is not "awaken" by the energy-saving wake-up signal, and the terminal does not need to perform PDCCH detection during the DRX ON duration. Therefore, when there is no data transmission for a terminal, the terminal may omit PDCCH detection during the DRX ON duration, thereby realizing energy saving. The time for the terminal before the DRX ON duration is referred to as the inactive time, and the time for the terminal during the ON DRX duration is referred to as the active time.

In the above energy-saving enhancement technology, the energy-saving wake-up signal itself also adopts a PDCCH-like waveform and structure.

FIG. 3 is a schematic flowchart of a transmission method according to an embodiment of the present application. The method may optionally be applied to the system illustrated in FIG. 1, but is not limited thereto. The method includes operation S310.

In S310, a terminal device receives first indication information from a network device, where the first indication information is used to indicate transmission of a first channel, and the first indication information is carried by a first signal based on sequence modulation.

Optionally, the first indication information may be used to wake up the terminal device to transmit/receive the first channel. Correspondingly, upon reception of the first indication information, the terminal device performs transmission/reception of the first channel. When the first indication information is not received by the terminal device, it does not need to perform transmission/reception of the first channel. Here, the transmission/reception of the first channel may refer to receiving and/or transmitting the first channel.

Optionally, the terminal device may perform transmission/reception of the first channel at a predetermined time domain position, or at a time domain position associated with the first indication information. Herein, the first channel may be a control channel and/or data channel.

Optionally, the first indication information may include a wake-up indication and a detection indication for the first channel. The first indication information may further include one or more types of information, including a type, a number, a resource configuration of the first channel, or an identifier (ID) related to the terminal device, etc. In some descriptions, the first indication information may also be referred to as a detection indication channel.

Exemplarily, the first indication information includes at least one of: a terminal identifier (ID) of the terminal device; a group ID associated with the terminal device (for example, the group ID of a group to which the terminal device belongs); or a cell ID associated with the terminal device (for example, the ID of a cell to which the terminal device belongs). The first indication information including the ID(s) related to the terminal device, may enable a terminal device to determine that the first indication information is used for scheduling the terminal device to perform transmission/reception of the first channel.

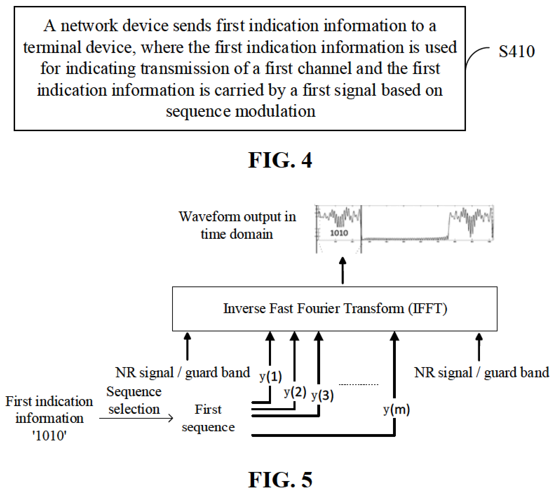

Corresponding to the above method, FIG. 4 is a schematic flowchart of a transmission method according to another embodiment of the present application. The method may optionally be applied to the system illustrated in FIG. 1, but is not limited thereto. The method may include operation S410.

In S410, a network device sends first indication information to a terminal device, where the first indication information is used to indicate transmission of a first channel, and the first indication information is carried by a first signal based on sequence modulation.

In embodiments of the present application, the network device sends the first indication information based on sequence modulation, and thus the first indication information can be correctly received through simple receiver processing. Therefore, the terminal device can use a terminal receiver with lower power consumption and a lower-complexity for reception, so that the terminal power consumption can be reduced and the terminal energy saving technology can be optimized.

Optionally, the sequence in the embodiments of the present application may include a complex (vector) sequence, such as a Constant Amplitude Zero Auto Correlation (CAZAC) sequence, a Zaddoff Chu (ZC) sequence, etc., or may include a Pseudo-Noise (PN) sequence, a Gold sequence, an M sequence, a Hadamard sequence, or other real sequences.

In some embodiments, the first signal includes one or more Orthogonal Frequency Division Multiplexing (OFDM) symbols obtained based on sequence modulation. That is, the modulation scheme for the first indication information is to modulate a sequence carrying the first indication information onto one or more OFDM symbols. Correspondingly, the terminal device may determine a sequence for carrying the first indication information through the one or more OFDM symbols, and further determine the first indication information based on the sequence.

In some embodiments, the first signal is obtained based on modulation of at least one sequence, and the at least one sequence includes a first sequence determined based on a sequence selection and related to the first indication information. Correspondingly, the terminal device may demodulate the received first signal to obtain the at least one sequence, which includes the first sequence related to the first indication information.

The sequence selection manner refers to selecting a sequence corresponding to specific bit information from a sequence set, and using the sequence to carry the specific bit information. Exemplarily, the first indication information includes at least n-bit information, and the first sequence is a first sequence corresponding to the n-bit information selected from the sequence set. Optionally, the sequence set includes 2*ⁿ* sequences that correspond to 2*ⁿ* values of n bits in one-to-one correspondence, and thus the n-bit information can be represented through the sequence selection manner.

In some embodiments, the first signal includes a first OFDM symbol, and multiple subcarriers in the first OFDM symbol are obtained based on mapping based on the first sequence.

Exemplarily, if the length of the first sequence is m, the first sequence may be represented as *y*(1)~*y*(*m*), and *y*(1)~*y*(*m*) are directly mapped onto a set of consecutive subcarriers (m subcarriers) without any pre-transformation. The first OFDM symbol may be obtained based on the m subcarriers, i.e. the waveform output in time domain is generated by modulation scheme of the OFDM symbol. Optionally, the value of m is one of {2, 4, 6, 8, 12, 16, 24, 36, 48, 60, 72} or another positive integer.

FIG. 5 is a schematic diagram of sequence modulation according to embodiments of the present application. As illustrated in FIG. 5, the first indication information may include 4-bit information "1010". The network device obtains a first sequence through sequence selection, and directly maps the first sequence onto m subcarriers to obtain an OFDM symbol. The network device transmits the OFDM symbol to implement transmission of the first indication information.

In some embodiments, the first sequence is a sequence corresponding to a first part of information in the first indication information. The at least one sequence used for modulation to obtain the first signal further includes a second sequence, and the second sequence corresponds to a second part of information in the first indication information.

Exemplarily, the first indication information includes at least two parts of information, where the first part of information is n-bit information, the second part of information is k-bit information (where k and n may be equal or unequal, and both k and n are positive integers). The first sequence is a sequence corresponding to the n-bit information and is used to represent (or carry) the n-bit information, and the second sequence is a sequence corresponding to the k-bit information and is used to represent (or carry) the k-bit information. Herein, the first sequence is mapped onto multiple subcarriers to be transmitted over an OFDM symbol, and the second sequence may be transmitted in the same manner or in a different manner.

In some embodiments, the first signal further includes a second OFDM symbol, and the second OFDM symbol is obtained by performing time-domain spreading based on the second sequence.

Optionally, the first signal may include one or more second OFDM symbols. The network device may perform time-domain spreading on the first OFDM symbol based on the second sequence, to obtain one or more second OFDM symbols.

In the above embodiments, the first indication information including more bit information is carried by means of time domain spreading, and the correlation between OFMD symbols is strong, which is beneficial for the terminal device to correctly demodulate to obtain the first indication information.

In some embodiments, the first signal further includes a third OFDM symbol concatenated with the first OFDM symbol, and multiple subcarriers in the third OFDM symbol are obtained based on mapping based on the second sequence.

Exemplarily, the second sequence may be a sequence that corresponds to the second part of information in the first indication information and is determined through sequence selection manner. Similarly, for a second sequence of length z (z is a positive integer), it may be directly mapped onto z subcarriers without pre-transformation to obtain a second OFDM symbol, so as to carry the second sequence via the second OFDM symbol, that is, to carry the second part of information in the first indication information. Herein, the first OFDM symbol and the second OFDM symbol are concatenated in the time domain.

According to the above embodiments, carrying of more information bits may be implemented based on sequence modulation scheme, thereby facilitating correct transmission of the first indication information through simple receiver processing.

In some embodiments, the first channel is transmitted based on a coding and modulation scheme.

Optionally, the network device may perform channel coding on raw information of the first channel to form a coded bit sequence, then modulate the bit sequence onto multiple modulation symbols, map the multiple modulation symbols onto subcarriers of an OFDM symbol, and sends them through the OFDM symbol.

In some embodiments, the first channel may be used to carry control information and/or data information. Exemplarily, the first channel may include a control channel for carrying the control information and/or a data channel for carrying the data information, or the first channel may include a joint channel that carries both the control information and the data information. Herein, the control channel is, for example, a Physical Uplink Control Channel (PUCCH). The data channel is, for example, a Physical Downlink Shared Channel (PDSCH) or a PDCCH.

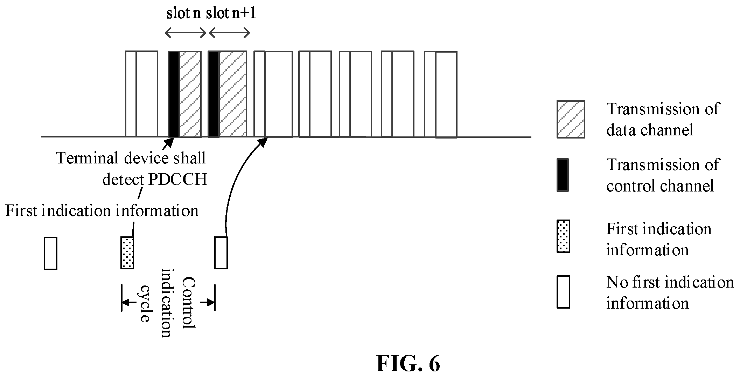

FIG. 6 is a schematic diagram of an application scenario of a transmission method in embodiments of the present application. FIG. 6 illustrates by taking an example where the first channel includes a control channel, and the first indication information is used to indicate that there is transmission of the control channel. The first indication information is sent according to a control indication cycle. Within each cycle, if the first indication information is received, the terminal device performs detection of control channel in one or more slots (for example, 2 slots as illustrated in FIG. 6) associated with the cycle, and performs transmission of a data channel according to the control channel. If the first indication information is not received, the terminal device does not perform detection of control channel in one or more time slots associated with the cycle, and thus there is no transmission of data channel. As illustrated in FIG. 6, since the first indication information is received by the terminal device within the control indication cycle, it performs detection of control channel PDCCH on the n-th slot (i.e., slot n) and the n+1-th slot (i.e., slot n+1) associated with the control indication cycle, and performs transmission of data channel according to the PDCCH.

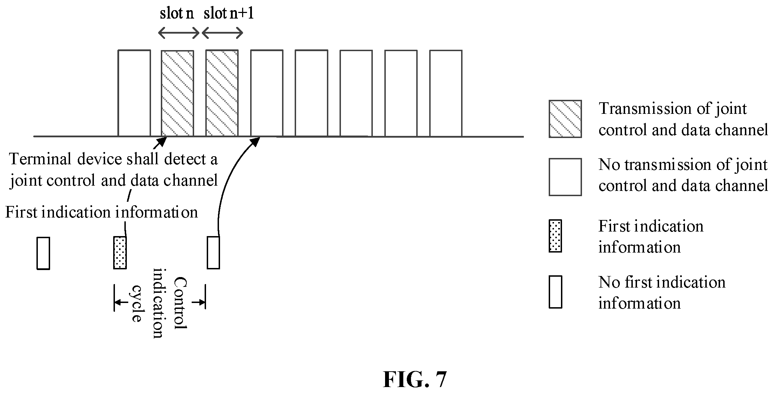

FIG. 7 is a schematic diagram of another application scenario of a transmission method in embodiments of the present application. FIG. 7 illustrates by taking an example where the first channel includes a joint control and data channel (that is, a channel that carries control information and data information), and the first indication information is used to indicate that there is transmission of the joint control and data channel. The first indication information is sent according to a control indication cycle. Within each cycle, if the first indication information is received, the terminal device performs detection of a joint control and data channel in one or more time slots (for example, 2 slots as illustrated in FIG. 7) associated with the cycle to receive the control information and the data information. If the first indication information is not received, the terminal device does not perform detection of the joint control and data channel in the one or more slots associated with the cycle. As illustrated in FIG. 7, since the first indication information is received by the terminal device within the control indication cycle, it performs detection of the joint control and data channel on the n-th slot (i.e., slot n) and the n+1-th slot (i.e., slot n+1) associated with the control indication cycle to obtain control information and data information.

In some embodiments, the first control information is associated with first resource information. Here, the first resource information is a resource(s) associated with the first channel, and the terminal device may perform transmission/reception of the first channel by adopting a configuration corresponding to the first resource information.

Optionally, the first indication information may indicate the first resource information associated with the first channel, so that the terminal device can determine the first resource information. Or, the association relationship between the first channel and the first resource information is configured in advance, and the terminal device can determine the first resource information when it determines to perform the transmission/reception of the first channel based on the first indication information.

In some embodiments, the first resource information includes at least one of the following information A to G, or the first resource information includes information of at least one dimension of the following A-G:
A. Time information;
   The time information may include time domain positions for transmission/reception of channel or a time interval between transmission/reception of channel. For example, the time interval between transmission/reception of PDCCH or PDSCH in units of slots may be once per slot, once every two slots, once every four slots, once every eight slots, or the like.
B: Frequency domain resource information of the first channel;
   The frequency domain information may include bandwidth. Taking RB (Resource Block) as a unit, the bandwidth of the first channel is x RBs, where the number x of RBs may be one of {12, 25, 50, 100}.
C. Spatial information;
   This information is, for example, the number of antennas for transmission/reception of channel or the number of chancel layers.
D. Control information amount;
   The control information amount may be the amount of control information in a control channel, or the amount of control information in a joint control and data channel.
E. Data throughput;
   The data throughput may be the amount of control information in a control channel or the amount of control information in a joint control and data channel.
F. Measurement throughput;
   The measurement throughput may include the amount of measurements to be performed and/or reported measurements by the terminal device.
G. Computational throughput of the terminal device.
   The computational throughput of the terminal device may include the number of floating-point operations (FLOP) per unit time of the terminal device, and the like.

It is to be noted that the first resource information includes at least one of the information A to G, meaning that the first channel may be associated with only one of specific time information, frequency domain information, spatial information, control information amount, data throughput, measurement throughput, and computation throughput, or the first channel may be associated with a combination of multiple types of information among the information A to G. For example, the first channel may be associated with specific time information, frequency domain information, and spatial domain information. For another example, the first channel may be associated with a certain control information amount, data throughput, and measurement throughput. In practical applications, the first resource information associated with the first channel information may be set according to scenario requirements or system agreements.

It may be understood that the above information are related to processing capabilities of the terminal device. For example, the processing capabilities of the terminal device may include a time interval during which the terminal device can perform transmission/reception of the first channel, a bandwidth of the first channel in which the terminal device can perform transmission/reception, the number of antennas of the terminal device or the number of channel layers, the control information amount or data throughput of the uplink or downlink first channel that the terminal device can perform transmission/reception, the measurements to be performed and reported measurements by the terminal device, and the computational throughput of the terminal device. In this way, when the first channel is associated with the first resource information, the first channel is also associated with a terminal processing capability corresponding to the first resource information. In some embodiments, the first indication information is further used to indicate that the terminal device switches to using a processing capability corresponding to the first resource information.

Optionally, the terminal device may support multiple processing capabilities (or processing core, processing kernel). Herein, a small processing capability corresponds to a lower capability item among the at least one dimension, for example, the time interval during which the terminal device can perform transmission/reception of the first channel is longer or the bandwidth of the first channel in which the terminal device can perform transmission/reception is smaller. A large processing capability corresponds to a higher capability item among the at least one dimension, for example, control information amount of the first channel that the terminal device can perform transmission/reception is larger or measurement throughput related to the first channel that the terminal device can perform is larger. When the first channel is associated with the first resource information, the terminal device switches to using a processing capability corresponding to the first resource information among the multiple processing capabilities supported by the terminal device.

In some embodiments, the terminal device supports a first processing capability and a second processing capability, and the first processing capability includes the second processing capability. In other words, the first processing capability and the second processing capability are included in the multiple processing capabilities supported by the terminal device. The first processing capability may overlap with the second processing capability.

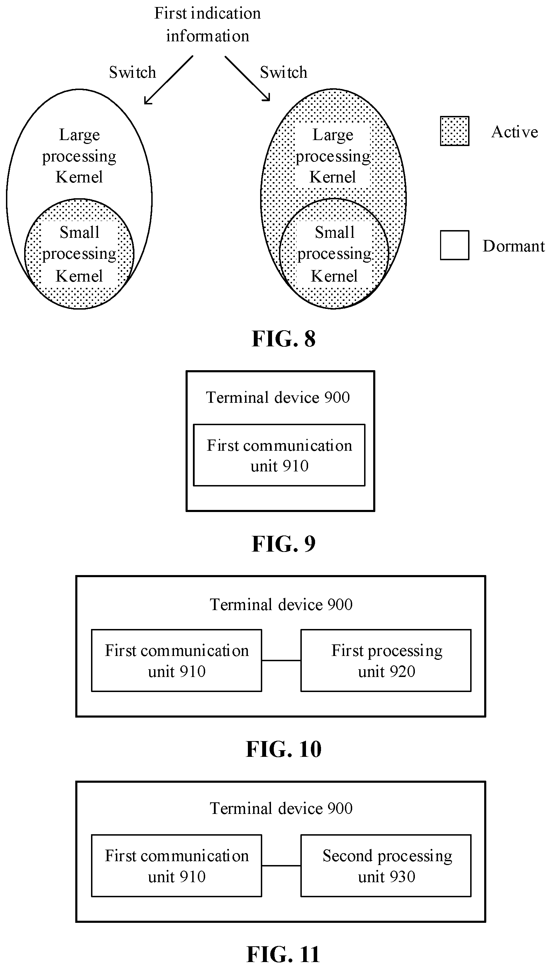

FIG. 8 is a schematic diagram of processing capabilities of a terminal device in embodiments of the present application. As illustrated in FIG. 8, the terminal device at least supports one large processing kernel and one small processing kernel, where the capability of the small processing kernel is contained in the large processing kernel. The first indication information may be used to indicate that the terminal device switches to using one of the processing kernels, or to activating one of the processing kernels. Optionally, the first indication information may include an indication for the first channel and an indication for a processing kernel or first resource information associated with the processing kernel. Or, the first indication information may include an indication for the first channel, where the first channel has been associated with the first resource information, and the terminal device may determine, based on the first indication, a processing kernel that needs to be switched to for use.

In related art, terminals are designed to support extremely high peak rates. Therefore, the capability requirements for the terminals are high. The LTE standard defines a maximum single-carrier bandwidth of 20 MHz, and much larger bandwidth is achieved through multi-carrier aggregation. 5G NR ultimately defines a maximum carrier bandwidth of 100 MHz for frequency bands below 6 GHz, which is already 5 times that of LTE. For millimeter-wave frequencies, the maximum carrier bandwidth is 400MHz. The Multiple Input Multiple Output (MIMO) antenna scale required by NR has also been further improved. The reference configuration for antennas of a LTE terminal is one transmit, two receive (1Tx/2Rx) antennas, while in NR R15, it requires a two transmit, four receive (2Tx/4Rx) antennas for frequencies above 2500MHz. NR R15/R16 also does not support half-duplex, requiring data processing capability is impossible for all uplink and downlink slots. However, in terms of processing capacity and speed, for certain application scenarios such as the Internet of Things (IoT), industrial automation, and wearable devices, such high processing capability are not necessary. In these scenarios, communication hardware is required to have smaller volume and lower power consumption. The capability requirement of light is a characteristic of such terminals. Based on such consideration, in NR R17, a standard for compact terminals with reduced capability is introduced. The standard for compact terminals reduces certain mandatory capabilities of NR R15/16. Corresponding terminal functional sets are defined for such capabilities. The standard for compact terminals further enables optimization of terminal identification, access procedure, and measurement power consumption, to adapt to relevant application scenarios. The design of such compact terminals can significantly reduce the complexity of terminal hardware. At the same time, the energy consumption of terminals can be correspondingly reduced, and energy saving can also be achieved. However, the introduction of compact terminals tends to customize transceivers of the terminals according to fixed capability specifications, which does not allow the transceivers to be designed in a modular manner, nor does it allow modularly turning on/off part of the transceivers according to data capacity. With the above embodiments, it may allow that the terminal device adaptively turns on and off part of the transceivers according to performance requirements such as data throughput, and by defining a universally supported minimum processing core, it is ensured that terminals with different capabilities can universally access the network. When a terminal requires a larger data throughput, it switches to a larger processing core, and this supports that the terminal transceivers do not need to be customized according to fixed capability specifications, and the terminal transceivers can be designed in a modular manner. Ultimately, the terminal can also modularly turn on/off part of the transceivers according to data capacity, thereby achieving a dynamic energy saving effect.

In some embodiments, the first indication information is further used to indicate that the terminal device adjusts a configuration parameter of the first channel and/or a measurement parameter related to the first channel.

Correspondingly, in some embodiments, the transmission method further includes that:
the terminal device adjusts a configuration parameter for channel transmission within a first time window based on a processing capability corresponding to the first resource information, where a length of the first time window is related to a configuration parameter before adjustment.

Exemplarily, the configuration parameter may include parameters of a receiving or transmitting channel, such as a time interval, a bandwidth (e.g., number of RBs), and the like. Based on the processing capability corresponding to the first resource information, the terminal device adjusts the time interval between and the bandwidth for the transmission/reception of the first channel to match the processing capability within a first time window after receiving the first indication information. The first time window includes, for example, k slots, where the value of k is determined based on the bandwidth for and time interval between transmission/reception of channel before switching.

In some embodiments, the transmission method further includes that:
the terminal device adjusts a measurement parameter related to the first channel based on the processing capability corresponding to the first resource information.

Exemplarily, the measurement parameter may include measurement parameters when the terminal device performs measurement related to the first channel, such as measured bandwidth (e.g., the number of RBs), time interval, etc. The first indication information, while indicating the switching of processing capability, triggers adaptive adjustment of corresponding measurement.

In some embodiments, the transmission method further includes that:
the terminal device performs transmission/reception of the first channel at one or more time-frequency positions associated with a time-frequency position of the first indication information.

Optionally, the time-frequency position of the first indication information may be understood as the time-frequency position where the first indication information is transmit or received.

According to the above embodiments, the time-frequency positions for the transmission/reception of the first channel are associated with the time-frequency position of the first indication information. Optionally, frequencies for transmission/reception of the first channel may be associated with the frequency of the first indication information, for example, they are the same or similar frequency; and/or, the time or time domain positions for transmission/reception of the first channel may be associated with the first indication information. For example, the time for transmission/reception of the first channel are determined based on the time domain position of the first indication information and a first time interval, where the first time interval may be pre-configured, for example, configured by a network or configured in default.

In some embodiments, the control information and data information in the first channel, when transmitted, are mapped onto a set of associated OFDM symbols.

For example, when the first channel includes the control information and data information, that is, when the first channel is a joint control and data channel, the control information and data information may be carried by associated OFDM symbols. Optionally, the network device may perform channel coding of the control information and the data information respectively and map the coded information onto a set of associated OFDM symbols, so that the terminal device can accurately obtain the control information and the data information based on the correlation among the OFDM symbols.

In some embodiments, the associated OFDM symbols include consecutive OFDM symbols in time domain. Optionally, the control information is mapped onto earlier OFDM symbols in the time domain, and the data information is mapped to later OFDM symbols in the time domain. The control information may provide scheduling information such as time-frequency resource occupied by the data information, modulation scheme, number of layers, etc., so that the data information can be accurately received by the terminal device.

In some embodiments, the control information and the data information in the first channel, when transmitted, are mapped onto subcarriers that are adjacent in frequency domain in the set of associated OFDM symbols.

According to the embodiment, the control information and data information in the first channel are correlated in the time domain and adjacent in the frequency domain, and thus channel responses for the control information and the data information may be consistent or close. This characteristic can be utilized for channel estimation, which is beneficial for saving resource overhead.

It can be seen that in related technologies, the wake-up signal received by the terminal device has a PDCCH structure, which is still relatively energy-consuming. Moreover, due to lack of multi-level processing capability, the terminal can only report a fixed processing capability, and the processing capability of the terminal remains unchanged after accessing the network. According to the embodiments of the present application, the first indication information based on sequence modulation is introduced, and thus the terminal can use a terminal receiver with lower power consumption and complexity for reception, so as to determine whether it is necessary to turn on a control/data receiver with larger power consumption. Such an operation can better optimize the power consumption of terminals. In some embodiments, according to the first indication information based on the sequence modulation, the terminal may also be allowed to adaptively turn on and off part of the transceivers according to performance requirements such as data throughput. By defining a universally supported minimum processing core, it is ensured that the terminal with different types of capabilities can universally access the network. When the terminal requires a larger data throughput, it switches to a larger processing core. Such a terminal no longer customizes the terminal transceivers according to a fixed capability specification. The terminal transceivers may be designed in a modular manner. Ultimately, the terminal can also turn on and off part of transceivers modularly according to data capacity, thereby achieving a dynamic energy saving effect.

FIG. 9 is a schematic block diagram of a terminal device 900 according to an embodiment of the present application. The terminal device 900 may include a first communication unit 910.

The first communication unit 910 is configured to receive first indication information from a network device. Herein, the first indication information is used to indicate transmission of a first channel, and the first indication information is carried by a first signal based on sequence modulation.

In some embodiments, the first signal comprises one or more OFDM symbols obtained based on sequence modulation.

In some embodiments, the first channel is transmitted through a coding and modulation scheme.

In some embodiments, the first control information is associated with first resource information.

In some embodiments, the first resource information comprises at least one of the following: time information, frequency domain information, spatial domain information, control information amount, data throughput, measurement throughput, or computational throughput.

In some embodiments, the first indication information is further used to indicate that the terminal device switches to using a processing capability corresponding to the first resource information.

In some embodiments, the terminal device 900 supports a first processing capability and a second processing capability, and the first processing capability includes the second processing capability.

In some embodiments, as illustrated in FIG. 10, the terminal device 900 further includes a first processing unit 920.

The first processing unit 920 is configured to adjust a configuration parameter for channel transmission within a first time window based on the processing capability corresponding to the first resource information, where a length of the first time window is related to a configuration parameter before adjustment.

In some embodiments, as illustrated in FIG. 10, the terminal device 900 further includes a second processing unit 930.

The second processing unit 930 is configured to adjust a measurement parameter related to the first channel based on the processing capability corresponding to the first resource information.

In some embodiments, the first indication information includes at least one of:
a terminal identifier (ID) of the terminal device;
a group ID associated with the terminal device; or
a cell ID associated with the terminal device.

In some embodiments, the first channel may be used to carry control information and/or data information.

In some embodiments, the first channel includes a control channel for carrying the control information and/or a data channel for carrying the data information.

In some embodiments, the first communication unit 910 is further configured to:
perform transmission/reception of the first channel at one or more time-frequency positions associated with a time-frequency position of the first indication information.

In some embodiments, the control information and the data information in the first channel are mapped onto a set of associated OFDM symbols, when transmitted.

In some embodiments, the associated OFDM symbols include consecutive OFDM symbols in time domain.

In some embodiments, the control information and the data information in the first channel, when transmitted, are mapped onto subcarriers that are adjacent in frequency domain in the set of associated OFDM symbols.

The terminal device 900 according to the embodiment of the present application can implement corresponding functions of the terminal device in the aforementioned method embodiments. For the flows, functions, implementation modes and beneficial effects corresponding to various modules (sub-modules, units or components, etc.) in the terminal device 900, reference may be made to the corresponding description in the above method embodiments, and will not be described again here. It is to be noted that the functions described with respect to various modules (sub-modules, units, components, or the like) in the terminal device 900 of the embodiments of the present application may be implemented by different modules (sub-modules, units, components, or the like), or may be implemented by the same module (sub-module, unit, component, or the like).

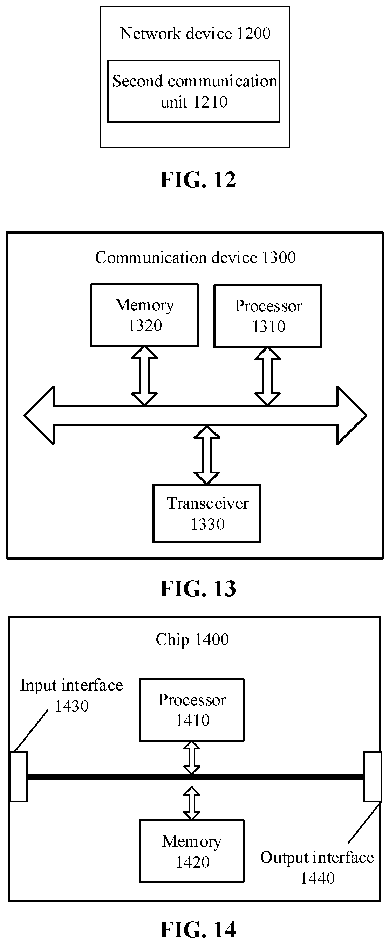

FIG. 12 is a schematic block diagram of a network device 1200 according to an embodiment of the present application. The network device 1200 may include a second communication unit 1210.

The second communication unit 1210 is configured to send first indication information to a terminal device, where the first indication information is used to indicate transmission of a first channel, and the first indication information is carried by a first signal based on sequence modulation.

In some embodiments, the first signal includes one or more OFDM symbols obtained based on sequence modulation.

In some embodiments, the first signal is obtained based on modulation of at least one sequence, and the at least one sequence includes a first sequence determined based on a sequence selection manner and related to the first indication information.

In some embodiments, the first signal includes a first OFDM symbol, and multiple subcarriers in the first OFDM symbol are obtained based on mapping based on the first sequence.

In some embodiments, the first sequence is a sequence corresponding to a first part of information in the first indication information. The at least one sequence further includes a second sequence, and the second sequence corresponds to a second part of information in the first indication information.

In some embodiments, the first signal further includes a second OFDM symbol, and the second OFDM symbol is obtained by performing time-domain spreading based on the second sequence.

In some embodiments, the first signal includes a third OFDM symbol concatenated with the first OFDM symbol, and multiple subcarriers in the third OFDM symbol are obtained based on mapping based on the second sequence.

In some embodiments, the first channel is transmitted through a coding and modulation scheme.

In some embodiments, the first control information is associated with first resource information.

In some embodiments, the first resource information includes at least one of the following: time information, frequency domain information, spatial domain information, control information amount, data throughput, measurement throughput, or computational throughput.

In some embodiments, the first indication information is further used to indicate that the terminal device switches to using a processing capability corresponding to the first resource information.

In some embodiments, the first indication information is further used to indicate that the terminal device adjusts a configuration parameter for channel transmission and/or a measurement parameter related to the first channel.

In some embodiments, the first indication information includes at least one of:
a terminal identifier (ID) of the terminal device;
a group ID associated with the terminal device; or
a cell ID associated with the terminal device.

In some embodiments, the first channel may be used to carry control information and/or data information.

In some embodiments, the first channel includes a control channel for carrying the control information and/or a data channel for carrying the data information.

In some embodiments, a time-frequency position of the first indication information is associated with a time-frequency position of the first channel.

In some embodiments, the control information and the data information in the first channel are mapped onto a set of associated OFDM symbols, when transmitted.

In some embodiments, the associated OFDM symbols include consecutive OFDM symbols in the time domain.

In some embodiments, the control information and the data information in the first channel, when transmitted, are mapped onto subcarriers that are adjacent in frequency domain in the set of associated OFDM symbols.

The network device 1200 according to the embodiment of the present application can implement corresponding functions of the network device in the aforementioned method embodiments. For the flows, functions, implementation modes and beneficial effects corresponding to various modules (sub-modules, units or components, etc.) in the network device 1200, reference may be made to the corresponding description in the above method embodiments, and will not be described again here. It is to be noted that the functions described with respect to various modules (sub-modules, units, components, or the like) in the network device 1200 of the embodiments of the present application may be implemented by different modules (sub-modules, units, components, or the like), or may be implemented by the same module (sub-module, unit, component, or the like).

FIG. 13 is a schematic block diagram of a communication device 1300 according to embodiments of the present application. The communication device 1300 includes a processor 1310, and the processor 1310 may invoke and execute a computer program from a memory, such that the communication device 1300 implements the methods in the embodiments of the present application.

In one embodiment, the communication device 1300 may further include a memory 1320. The processor 1310 may invoke and execute a computer program from the memory 1320, such that the communication device 1300 implements the methods in the embodiments of the present application.

The memory 1320 may be a separate device independent of the processor 1310 or may be integrated in the processor 1310.

In one implementation, the communication device 1300 may further include a transceiver 1330, and the processor 1310 may control the transceiver 1330 to communicate with other devices, specifically, to transmit information or data to other devices, or to receive information or data sent by other devices.

Here, the transceiver 1330 may include a transmitter and a receiver. The transceiver 1330 may further include antennas. The number of antennas may be one or more.

In one implementation, the communication device 1300 may be the network device in the embodiments of the present application, and the communication device 1300 may implement corresponding processes in various methods implemented by the network device in the embodiments of the present application, which will not be elaborated herein for the sake of brevity.

In one implementation, the communication device 1300 may be the terminal device in the embodiments of the present application, and the communication device 1300 may implement corresponding processes in various methods implemented by the terminal device in the embodiments of the present application, which will not be elaborated herein for the sake of brevity.

FIG. 14 is a schematic structural diagram of a chip 1400 provided by an embodiment of the present application. The chip 1400 includes a processor 1410, and the processor 1410 may invoke and execute a computer program from a memory to implement the methods in the embodiments of the present application.

In one implementation, the communication device 1400 may further include a memory 1420. The processor 1410 may invoke and execute a computer program from the memory 1420, such that the communication device implements the methods performed by the terminal device or network device in the embodiments of the present application.

The memory 1420 may be a separate device independent of the processor 1410 or may be integrated in the processor 1410.

In one implementation, the communication device 1400 may further include an input interface 1430. The processor 1410 may control the input interface 1430 to communicate with other devices or chips, and specifically, may acquire information or data transmitted by other devices or chips.

In one implementation, the communication device 1400 may further include an output interface 1440. The processor 1410 may control the output interface 1440 to communicate with other devices or chips, specifically, may output information or data to other devices or chips.

In one implementation, the chip may be applied to the network device in the embodiments of the present application, and the chip may implement corresponding processes in various methods implemented by the network device in the embodiments of the present application, which will not be elaborated herein for the sake of brevity.

In one implementation, the chip may be applied to the terminal device in the embodiments of the present application, and the chip may implement corresponding processes in various methods implemented by the terminal device in the embodiments of the present application, which will not be elaborated herein for the sake of brevity.

The chips applied to the network device and the terminal device may be the same chip or different chips.

It is to be understood that the chip mentioned in the embodiments of the present disclosure may also be referred to as a system-level chip, a system chip, a chip system or a system-on-chip or the like.

The processor mentioned above may be a general purpose processor, a digital signal processors (DSP), a field programmable gate array (FPGA), an application specific integrated circuit (ASIC) or another programmable logic devices, a transistor logic device, a discrete hardware component, and the like. The general purpose processor mentioned above may be a microprocessor or any conventional processor.

The memory mentioned above may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EPROM), or a flash memory. The volatile memory may be a random access memory (RAM).

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

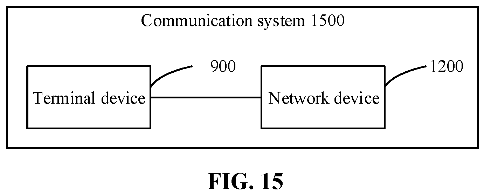

FIG. 15 is a schematic block diagram of a communication system 1500 according to embodiments of the present application. The communication system 1500 includes a terminal device 900 and a network device 1200.

The network device 1200 transmits first indication information to A terminal device, where the first indication information is used to indicate transmission of a first channel, and the first indication information is carried by a first signal based on sequence modulation.

In some embodiments, the terminal device 900 receives the first indication information.

The terminal device 900 may implement corresponding functions implemented by the terminal device in the above methods, and the network device 1200 may implement corresponding functions implemented by the network device in the above methods. For the sake of brevity, details will not be described here.

The above embodiments may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions described in accordance with the embodiments of the present application are generated in whole or in part. The computer may be a general purpose computer, a dedicated computer, a computer network, or other programmable devices. The computer instructions may be stored in a computer-readable storage medium or transmitted from one computer-readable storage medium to another one. For example, the computer instructions may be transmitted from one website, computer, server or data center by wired (e.g. coaxial cable, optical fiber, digital subscriber line (DSL)) or wireless (e.g. infrared, wireless, microwave, etc.) means to another website, computer, server or data center. The computer-readable storage medium may be any available medium that can be store and read by a computer, or a data storage device including a server, a data center, or the like that encompasses one or more available media integrations. The available media may be magnetic media (e.g., floppy disk, hard disk, magnetic tape), optical media (e.g., DVD), or semiconductor media (e.g., solid state disk (SSD)), etc.

It should also be understood that in various embodiments of the present application, the size of the sequence number of the above-described processes does not mean the order of execution, and the order of execution of various processes should be determined by their functions and internal logics, and should not constitute any limitation on the implementation of the embodiments of the present application.

Those skilled in the art will clearly appreciate that, for convenience and conciseness of description, the specific operating processes of the above-described systems, apparatuses and units may refer to the corresponding processes in the aforementioned method embodiments and will not be repeated herein.

The above is only the specific implementation of the present disclosure, but the scope of protection of the present disclosure is not limited thereto. Any person skilled in the art may easily think of changes or substitutions within the technical scope disclosed in the present application, which is to be covered within the protection scope of the present application. Therefore, the scope of protection of the present application shall be subject to the scope of protection of the claims.

## Claims

1. A method for transmission, comprising:
receiving, by a terminal device, first indication information from a network device, wherein the first indication information is used to indicate transmission of a first channel, and the first indication information is carried by a first signal based on sequence modulation.

2. The method of claim 1, wherein the first signal comprises one or more orthogonal frequency division multiplexing (OFDM) symbols obtained based on sequence modulation.

3. The method of claim 1 or 2, wherein the first signal is obtained based on modulation of at least one sequence, and the at least one sequence comprises a first sequence determined based on a sequence selection manner and related to the first indication information.

4. The method of claim 3, wherein the first signal comprises a first OFDM symbol, and a plurality of subcarriers in the first OFDM symbol are obtained based on mapping based on the first sequence.

5. The method of claim 4, wherein the first sequence is a sequence corresponding to a first part of information in the first indication information, and the at least one sequence further comprises a second sequence corresponding to a second part of information in the first indication information.

6. The method of claim 5, wherein the first signal further comprises a second OFDM symbol, and the second OFDM symbol is obtained by performing time-domain spreading based on the second sequence.

7. The method of claim 5, wherein the first signal further comprises a third OFDM symbol concatenated with the first OFDM symbol, and a plurality of subcarriers in the third OFDM symbol are obtained based on mapping based on the second sequence.

8. The method of any one of claims 1 to 7, wherein the first channel is transmitted based on a coding and modulation scheme.

9. The method of any one of claims 1 to 8, wherein the first channel is associated with first resource information.

10. The method of claim 9, wherein the first resource information comprises at least one of the following: time information, frequency domain information, spatial domain information, control information amount, data throughput, measurement throughput, or computational throughput.

11. The method of claim 9 or 10, wherein the first indication information is further used to indicate that the terminal device switches to using a processing capability corresponding to the first resource information.

12. The method of claim 11, wherein the terminal device supports a first processing capability and a second processing capability, the first processing capability including the second processing capability.

13. The method of claim 11 or 12, further comprising:
adjusting, by the terminal device, a configuration parameter for the first channel within a first time window based on the processing capability corresponding to the first resource information, wherein a length of the first time window is related to a configuration parameter before adjustment.

14. The method of any one of claims 11 to 13, further comprising:
adjusting, by the terminal device, a measurement parameter related to the first channel based on the processing capability corresponding to the first resource information.

15. The method of any one of claims 1 to14, wherein the first indication information comprises at least one of:
a terminal identifier (ID) of the terminal device;
a group ID associated with the terminal device; or
a cell ID associated with the terminal device.

16. The method of any one of claims 1 to 15, wherein the first channel is used to carry control information and/or data information.

17. The method of claim 16, wherein the first channel comprises a control channel for carrying the control information and/or a data channel for carrying the data information.

18. The method of any one of claims 1 to 17, further comprising:
performing, by the terminal device, transmission/reception of the first channel at one or more time-frequency positions associated with a time-frequency position of the first indication information.

19. The method of any one of claims 1 to 18, wherein control information and data information in the first channel, when transmitted, are mapped onto a set of associated OFDM symbols.

20. The method of claim 19, wherein the set of associated OFDM symbols comprises OFDM symbols that are consecutive in time domain.

21. The method of claim 19 or 20, wherein the control information and the data information in the first channel, when transmitted, are mapped onto subcarriers that are adjacent in frequency domain in the set of associated OFDM symbols.

22. A method for transmission, comprising:
sending, by a network device, first indication information to a terminal device, wherein the first indication information is used to indicate transmission of a first channel, and the first indication information is carried by a first signal based on sequence modulation.

23. The method of claim 22, wherein the first signal comprises one or more orthogonal frequency division multiplexing (OFDM) symbols obtained based on sequence modulation.

24. The method of claim 22 or 23, wherein the first signal is obtained based on modulation of at least one sequence, and the at least one sequence comprises a first sequence determined based on a sequence selection manner and related to the first indication information.

25. The method of claim 24, wherein the first signal comprises a first OFDM symbol, and a plurality of subcarriers in the first OFDM symbol are obtained based on mapping based on the first sequence.

26. The method of claim 25, wherein the first sequence is a sequence corresponding to a first part of information in the first indication information, and the at least one sequence further comprises a second sequence corresponding to a second part of information in the first indication information.

27. The method of claim 26, wherein the first signal further comprises a second OFDM symbol, and the second OFDM symbol is obtained by performing time-domain spreading based on the second sequence.

28. The method of claim 26, wherein the first signal comprises a third OFDM symbol concatenated with the first OFDM symbol, and a plurality of subcarriers in the third OFDM symbol are obtained based on mapping based on the second sequence.

29. The method of any one of claims 22 to 28, wherein the first channel is transmitted based on a coding and modulation scheme.

30. The method of any one of claims 22 to 29, wherein the first channel is associated with first resource information.

31. The method of claim 30, wherein the first resource information comprises at least one of the following: time information, frequency domain information, spatial domain information, control information amount, data throughput, measurement throughput, or computational throughput.

32. The method of claim 30 or 31, wherein the first indication information is further used to indicate to switch to using a processing capability corresponding to the first resource information.

33. The method of claim 32, wherein the first indication information is further used to indicate that the terminal device adjusts a configuration parameter of the first channel and/or a measurement parameter related to the first channel.

34. The method of any one of claims 22 to 33, wherein the first indication information comprises at least one of:
a terminal identifier (ID) of the terminal device;
a group ID associated with the terminal device; or
a cell ID associated with the terminal device.

35. The method of any one of claims 22 to 34, wherein the first channel is used to carry control information and/or data information.

36. The method of claim 35, wherein the first channel comprises a control channel for carrying the control information and/or a data channel for carrying the data information.

37. The method of any one of claims 22 to 36, wherein a time-frequency position of the first indication information is associated with a time-frequency position of the first channel.

38. The method of any one of claims 22 to 37, wherein control information and data information in the first channel, when transmitted, are mapped onto a set of associated OFDM symbols.

39. The method of claim 38, wherein the set of associated OFDM symbols comprise OFDM symbols that are consecutive in time domain.

40. The method of claim 38 or 39, wherein control information and data information in the first channel, when transmitted, are mapped onto subcarriers that are adjacent in frequency domain in the set of associated OFDM symbols.

41. A terminal device, comprising:
a first communication unit, configured to receive first indication information from a network device, wherein the first indication information is used to indicate transmission of a first channel, and the first indication information is carried by a first signal based on sequence modulation.

42. The terminal device of claim 41, wherein the first signal comprises one or more orthogonal frequency division multiplexing (OFDM) symbols obtained based on sequence modulation.

43. The terminal device of claim 41 or 42, wherein the first signal is obtained based on modulation of at least one sequence, and the at least one sequence comprises a first sequence determined based on a sequence selection manner and related to the first indication information.

44. The terminal device of claim 43, wherein the first signal comprises a first OFDM symbol, and a plurality of subcarriers in the first OFDM symbol are obtained based on mapping based on the first sequence.

45. The terminal device of claim 44, wherein the first sequence is a sequence corresponding to a first part of information in the first indication information, and the at least one sequence further comprises a second sequence corresponding to a second part of information in the first indication information.

46. The terminal device of claim 45, wherein the first signal further comprises a second OFDM symbol, and the second OFDM symbol is obtained by performing time-domain spreading based on the second sequence.

47. The terminal device of claim 45, wherein the first signal comprises a third OFDM symbol concatenated with the first OFDM symbol, and a plurality of subcarriers in the third OFDM symbol are obtained based on mapping based on the second sequence.

48. The terminal device of any one of claims 41 to 47, wherein the first channel is transmitted based on a coding and modulation scheme.

49. The terminal device of any one of claims 41 to 48, wherein the first channel is associated with first resource information.

50. The terminal device of claim 49, wherein the first resource information comprises at least one of the following: time information, frequency domain information, spatial domain information, control information amount, data throughput, measurement throughput, or computational throughput.

51. The terminal device of claim 49 or 50, wherein the first indication information is further used to indicate that the terminal device switches to using a processing capability corresponding to the first resource information.

52. The terminal device of claim 51, wherein the terminal device supports a first processing capability and a second processing capability, the first processing capability including the second processing capability.

53. The terminal device of claim 51 or 52, further comprising:
a first processing unit, configured to adjust a configuration parameter for the first channel within a first time window based on the processing capability corresponding to the first resource information, wherein a length of the first time window is related to a configuration parameter before adjustment.

54. The terminal device of any one of claims 51 to 53, further comprising:
a second processing unit, configured to adjust a measurement parameter related to the first channel based on the processing capability corresponding to the first resource information.

55. The terminal device of any one of claims 41 to 54, wherein the first indication information comprises at least one of:
a terminal identifier (ID) of the terminal device;
a group ID associated with the terminal device; or
a cell ID associated with the terminal device.

56. The terminal device of any one of claims 41 to 55, wherein the first channel is used to carry control information and/or data information.

57. The terminal device of claim 56, wherein the first channel comprises a control channel for carrying the control information and/or a data channel for carrying the data information.

58. The terminal device of any one of claims 41 to 57, wherein the first communication unit is further configured to:
perform transmission/reception of the first channel at one or more time-frequency positions associated with a time-frequency position of the first indication information.

59. The terminal device of any one of claims 41 to 58, wherein control information and data information in the first channel, when transmitted, are mapped onto a set of associated OFDM symbols.

60. The terminal device of claim 59, wherein the set of associated OFDM symbols comprises OFDM symbols that are consecutive in time domain.

61. The terminal device of claim 59 or 60, wherein the control information and the data information in the first channel, when transmitted, are mapped onto subcarriers that are adjacent in frequency domain in the set of associated OFDM symbols.

62. A network device, comprising:
a second communication unit, configured to send first indication information to a terminal device, wherein the first indication information is used to indicate transmission of a first channel, and the first indication information is carried by a first signal based on sequence modulation.

63. The network device of claim 62, wherein the first signal comprises one or more orthogonal frequency division multiplexing (OFDM) symbols obtained based on sequence modulation.

64. The network device of claim 62 or 63, wherein the first signal is obtained based on modulation of at least one sequence, and the at least one sequence comprises a first sequence determined based on a sequence selection manner and related to the first indication information.

65. The network device of claim 64, wherein the first signal comprises a first OFDM symbol, and a plurality of subcarriers in the first OFDM symbol are obtained based on mapping based on the first sequence.

66. The network device of claim 65, wherein the first sequence is a sequence corresponding to a first part of information in the first indication information, and the at least one sequence further comprises a second sequence corresponding to a second part of information in the first indication information.

67. The network device of claim 66, wherein the first signal further comprises a second OFDM symbol, and the second OFDM symbol is obtained by performing time-domain spreading based on the second sequence.

68. The network device of claim 66, wherein the first signal comprises a third OFDM symbol concatenated with the first OFDM symbol, and a plurality of subcarriers in the third OFDM symbol are obtained based on mapping based on the second sequence.

69. The network device of any one of claims 62 to 68, wherein the first channel is transmitted based on a coding and modulation scheme.

70. The network device of any one of claims 62 to 69, wherein the first channel is associated with first resource information.

71. The network device of claim 70, wherein the first resource information comprises at least one of the following: time information, frequency domain information, spatial domain information, control information amount, data throughput, measurement throughput, or computational throughput.

72. The network device of claim 70 or 71, wherein the first indication information is further used to indicate that the terminal device switches to using a processing capability corresponding to the first resource information.

73. The network device of claim 72, wherein the first indication information is further used to indicate that the terminal device adjusts a configuration parameter for the first channel and/or a measurement parameter related to the first channel.

74. The network device of any one of claims 62 to 73, wherein the first indication information comprises at least one of:
a terminal identifier (ID) of the terminal device;
a group ID associated with the terminal device; or
a cell ID associated with the terminal device.

75. The network device of any one of claims 62 to 74, wherein the first channel is used to carry control information and/or data information.

76. The network device of claim 75, wherein the first channel comprises a control channel for carrying the control information and/or a data channel for carrying the data information.

77. The network device of any one of claims 62 to 76, wherein a time-frequency position of the first indication information is associated with a time-frequency position of the first channel.

78. The network device of any one of claims 62 to 77, wherein control information and data information in the first channel, when transmitted, are mapped onto a set of associated OFDM symbols.

79. The network device of claim 78, wherein the set of associated OFDM symbols comprises OFDM symbols that are consecutive in time domain.

80. The network device of claim 78 or 79, wherein the control information and the data information in the first channel, when transmitted, are mapped onto subcarriers that are adjacent in frequency domain in the set of associated OFDM symbols.

81. A terminal device, comprising: a transceiver, a processor, and a memory, wherein the memory is configured to store a computer program, the transceiver is configured to communicate with other devices, and the processor is configured to invoke and execute the computer program stored in the memory to cause the terminal device to perform the method of any one of claims 1 to 21.

82. A network device, comprising: a transceiver, a processor, and a memory, wherein the memory is configured to store a computer program, the transceiver is configured to communicate with other devices, and the processor is configured to invoke and execute the computer program stored in the memory to cause the network device to perform the method of any one of claims 22 to 40.

83. A chip, comprising: a processor, configured to invoke and execute a computer program from a memory, to cause a device on which the chip is mounted to perform the method of any one of claims 1 to 21.

84. A chip, comprising: a processor configured to invoke and execute a computer program from a memory, to cause a device on which the chip is mounted to perform the method of any one of claims 22 to 40.

85. A computer readable storage medium, for storing a computer program that, when executed by a device, causes the device to perform the method of any one of claims 1 to 21.

86. A computer readable storage medium, for storing a computer program that, when executed by a device, causes the device to perform the method of any one of claims 22 to 40.

87. A computer program product, comprising computer program instructions, which cause a computer to perform the method of any one of claims 1 to 21.

88. A computer program product, comprising computer program instructions, which cause a computer to perform the method of any one of claims 22 to 40.

89. A computer program, which cause a computer to perform the method of any one of claims 1 to 21.

90. A computer program, which cause a computer to perform the method of any one of claims 22 to 40.

91. A communication system, comprising:
a terminal device, for performing the method of any one of claims 1 to 21; and
a network device, for performing the method of any one of claims 22 to 40.
